(19) Europäisches Patentamt
European Patent Office
Office européen des brevets

(11) **EP 4 234 070 A2**

(12) **EUROPEAN PATENT APPLICATION**

(43) Date of publication:
**30.08.2023 Bulletin 2023/35**

(51) International Patent Classification (IPC):
***B01D 65/08*** (2006.01)

(21) Application number: **23173698.4**

(22) Date of filing: **30.09.2019**

(52) Cooperative Patent Classification (CPC):
**B01D 65/02; B01D 61/20; C02F 1/444;**
B01D 2315/06; B01D 2321/04; B01D 2321/164;
B01D 2321/168; B01D 2321/2041; C02F 1/40;
C02F 2101/32; C02F 2103/008; C02F 2103/18;
C02F 2303/16; C02F 2305/04

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.12.2018 JP 2018229800
07.12.2018 JP 2018229801**

(62) Document number(s) of the earlier application(s) in accordance with Art. 76 EPC:
**19892058.9 / 3 892 591**

(71) Applicant: **Organo Corporation
Tokyo 136-8631 (JP)**

(72) Inventors:
• **TAKIGUCHI, Keisuke
Tokyo, 136-8631 (JP)**

• **YODEN, Mitsuru
Tokyo, 136-8631 (JP)**
• **KANAI, Osamu
Tokyo, 136-8631 (JP)**
• **SASAJIMA, Yasuhiro
Tokyo, 136-8631 (JP)**

(74) Representative: **Bianchetti & Minoja with
Trevisan & Cuonzo IPS SRL
Via Plinio, 63
20129 Milano (IT)**

Remarks:
This application was filed on 16-05-2023 as a divisional application to the application mentioned under INID code 62.

(54) **APPRATUS AND METHOD FOR FILTRATING OIL-CONTAINING DRAINAGE WATER, AND METHOD AND APPARATUS FOR RESTORING FILTRATION MEMBRANE DEVICE**

(57) A filtering apparatus and a filtering method for waste water that contains oil that is compact and that easily prevents the adhesion of solid matters that contains oil is provided. Filtering apparatus 1 for waste water that contains oil has immersed membrane tank 2 to which waste water that contains oil is introduced; filter membrane apparatus 3 that is immersed with the waste water that contains oil that is introduced to immersed membrane tank 2 and that filters the waste water that contains oil; and agitator 8 that is provided in immersed membrane tank 2 and that agitates the waste water that contains oil that is introduced to immersed membrane tank 2. A method for filtering waste water that contains oil has the steps of: introducing waste water that contains oil to immersed membrane tank 2 that houses filter membrane apparatus 3, and immersing filter membrane apparatus 3 with the waste water that contains oil; and filtering the waste water that contains oil by means of filter membrane apparatus 3 while agitator 8 that is provided in immersed membrane tank 2 agitates the waste water that contains oil that is introduced to immersed membrane tank 2.

EP 4 234 070 A2

**Description**

BACKGROUND OF THE INVENTION

1. Field of the Invention:

The present application is based on, and claims priority from, JP2018-229800 and JP2018-229801, filed on December 7, 2018, and the disclosure of which is hereby incorporated by reference herein in its entirety.
The present invention relates to a filtering apparatus and a filtering method for waste water that contains oil and a method and an apparatus for regenerating a filter membrane apparatus, particularly to the arrangement of an immersed membrane type filtering apparatus.

2. Description of the Related Art

The technology to filter and reduce waste water that contains oil is known. An example of the waste water that contains oil is scrubber waste water that is discharged from an exhaust gas scrubber of a ship. An exhaust gas scrubber is an apparatus that removes sulfur oxides (SOx) that are contained in exhaust gas of a diesel engine that is mounted on a ship. There are several types of exhaust gas scrubbers, and one of them is known as a wet type. In a wet type exhaust gas scrubber, scrubbing water is sprayed to the exhaust gas of a diesel engine so that the sprayed scrubbing water comes into gas-liquid contact with the exhaust gas, and SOx is removed by adsorption. Scrubber waste water contains SOx, as well as fine particulate matters such as soot, oil, aromatic hydrocarbon and the like that are contained in the exhaust gas. Scrubber waste water can be purified, for example, by a filter membrane.
Since waste water that contains oil may be highly viscous, when a filter membrane is used for filtration, solid matters that contain oil (also called cake) that are made of oil and suspended substances may adhere to the filter surface thereof. The solid matters that contain oil are gradually compressed, so as to cause the membrane to be clogged. Therefore, it is desired to prevent the solid matters that contain oil from adhering to the filter surface. Conventionally, a module type filter membrane may be used in order to filter waste water that contains oil, but the inner space of the membrane module and the space between the membrane module and the container are easily clogged with the solid matters that contain oil, and stable operation may be impeded. Thus, an immersed membrane type filtering apparatus, in which a filter membrane is immersed in an immersion tank, may be used to filter the waste water that contains oil. JP2013-52364 discloses a method of providing a separation layer that causes the oil in the waste water that contains oil to float for separation. The separation layer is provided upstream of the immersion tank where hollow fiber membrane modules are immersed.

SUMMARY OF THE INVENTION

According to the method that is described in JP2013-52364, the use of the immersion tank reduces the possibility of solid matters that contains oil to adhere to filter or wall surfaces, as compared to a module type filter membrane. However, when a highly viscous waste water that contains oil is used, it is still difficult to prevent solid matters that contain oil from adhering to the wall surface of an immersion tank or the filter surface of the filter membrane. Furthermore, since the separation tank is provided in addition to the immersion tank, there is room for improvement from the standpoint of the installation area and cost.
The present invention aims at providing a filtering apparatus and a filtering method for waste water that contains oil that is compact and that easily prevents the adhesion of solid matters that contains oil.
A filtering apparatus for waste water that contains oil according to the present invention comprises; an immersed membrane tank to which waste water that contains oil is introduced; a filter membrane apparatus that is immersed with the waste water that contains oil that is introduced to the immersed membrane tank and that filters the waste water that contains oil; and an agitator that is provided in the immersed membrane tank and that agitates the waste water that contains oil that is introduced to the immersed membrane tank.
A method for filtering waste water that contains oil according to the present invention comprises the steps of: introducing waste water that contains oil to an immersed membrane tank that houses a filter membrane apparatus, and immersing the filter membrane apparatus with the waste water that contains oil; and filtering the waste water that contains oil by means of the filter membrane apparatus while an agitator that is provided in the immersed membrane tank agitates the waste water that contains oil that is introduced to the immersed membrane tank.
According to the present invention, since the waste water that contains oil that is introduced to the immersed membrane tank is agitated by means of the agitator that is provided in the immersed membrane tank, it is possible to provide a filtering apparatus and a filtering method for waste water that contains oil that is compact and that easily prevents the adhesion of oil solid matters that contain oil to walls or filters.
The above and other objects, features and advantages of the present invention will become apparent from the following description with reference to the accompanying drawings which illustrate examples of the present invention.

BRIEF DESCRIPTION OF THE DRAWINGS

Fig. 1 is a schematic view showing the arrangement of a filtering apparatus according to a first embodiment of the present invention;

Fig. 2 is a top view of an immersed membrane tank of the filtering apparatus shown in Fig. 1;

Fig. 3A is a side view of a filter membrane module;

Fig. 3B is a sectional view of the filter membrane module;

Fig. 4A is a top view of an immersed membrane tank of a filtering apparatus according to a second embodiment of the present invention;

Fig. 4B is a partial enlarged view of Fig. 4A;

Fig. 5 is a schematic view showing the arrangement of a filtering apparatus according to a third embodiment of the present invention;

Fig. 6 is a perspective view showing the schematic arrangement of a ceramic membrane;

Fig. 7 is a schematic view showing the arrangement of a filtering apparatus according to a fourth embodiment of the present invention;

Fig. 8 is a schematic view showing the arrangement of a filtering apparatus according to a modification of the fourth embodiment of the present invention;

Fig. 9 is a schematic view showing the arrangement of a filtering apparatus according to a fifth embodiment of the present invention;

Fig. 10 is a schematic view showing the change of suction pressure before and after backwashing;

Fig. 11 is a schematic view showing the arrangement of a filtering apparatus according to a sixth embodiment of the present invention;

Fig. 12 is a schematic view showing the arrangement of a filtering apparatus according to a seventh embodiment of the present invention; and

Fig. 13 is a graph showing the relationship between water feeding days and suction pressure in the Example.

List of Reference Numerals

| | |
|---|---|
| 1 | filtering apparatus |
| 2 | immersed membrane tank |
| 3 | filter membrane apparatus |
| 3A | filter membrane module |
| 3B | sub module |
| 3C | hollow fiber membrane filter |
| 3D | ceramic membrane |
| 4 | means for supplying waste water that contains oil |
| 5 | suction means |
| 5A | suction line |
| 5B | suction pump |
| 6 | filtered water tank (means for storing filtered water) |
| 8 | agitating means (agitator) |
| 8A | rotational shaft |
| 8B | agitating blade |
| 11 | backwash line |
| 12 | backwash pump |
| 13 | drain line |
| 14 | waste water storage tank |
| 15 | drain pump |
| 16 | circulating line |
| 17 | agent supply means |
| 17A | agent storage tank |
| 17B | agent supply line |
| 18 | apparatus for regeneration |
| 19 | first pure water supply line |
| 20 | blower |
| 21 | pure water tank |
| 22 | second pure water supply line |
| 31 | upper container |
| 32 | lower container |
| 34 | crane |

Description of Embodiments

Some embodiments of the present invention will now be described with reference to the drawing. The present invention is applied to a filtering apparatus that filters waste water that contains oil. Examples of waste water that contains oil include scrubber waste water that is discharged from an exhaust gas scrubber (not shown) of a ship, as well as waste water that includes oil cake that is discharged from a food plant, and the like, and the present invention can be widely applied to liquids that contain oil. Scrubber waste water contains oil, as well as suspended substances (SS).

(First embodiment)

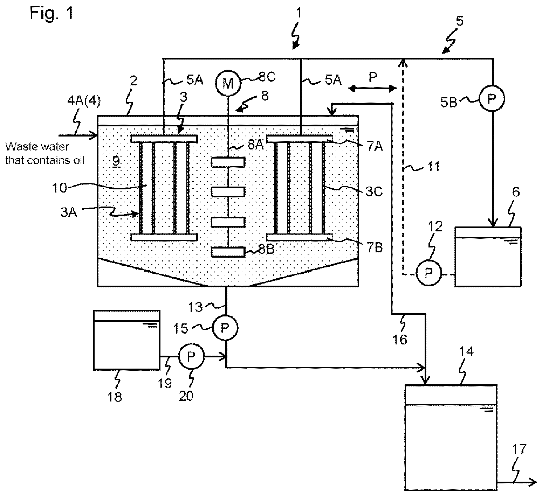

Fig. 1 shows the schematic arrangement of filtering apparatus 1 according to the first embodiment of the present invention. Filtering apparatus 1 for waste water that contains oil includes immersed membrane tank 2 where waste water that contains oil is introduced, filter membrane apparatus 3 that is housed in immersed membrane tank 2, means for supplying waste water 4 that contains oil that supplies the waste water that contains to immersed membrane tank 2, suction means 5 that sucks filtered water of the waste water that contains oil, and filtered water tank (means for storing filtered water) 6 that stores the sucked up water that has been filtered.

Immersed membrane tank 2 has a generally cylindrical shape. In other words, tank 2 has a circular shape in plane P that is parallel to the liquid surface of the waste water that contains oil. The volume of immersed membrane tank is sufficiently larger than the space required to install filter membrane apparatus 3, and thereby the space between immersed membrane tank 2 and filter membrane apparatus 3 is prevented from being clogged with solid matters that contain oil. Further, in order to limit the adhesion of solid matters that contain oil, immersed membrane tank 2 is preferably formed from materials such as stainless steel, and/or the inner surface is preferably covered with a polyethylene lining. It is also preferable to form immersed membrane tank 2 from PE (polyethylene), PVC (polyvinyl chloride), PTFE (polytetrafluoroethylene) or ceramic. In order to generate a complicated water flow, unevenness, ribs, baffle plates (baffles), and the like may be provided on the side surfaces of immersed membrane tank 2.

Filter membrane apparatus 3 is immersed with waste water that contains oil that is introduced to immersed membrane tank 2, and filters the waste water that contains the oil. Filter membrane apparatus 3 includes a plurality of hollow fiber membrane filters 3C, and hollow fiber membrane filters 3C are provided between common upper support 7A and common lower support 7B. Hollow fiber membrane filter 3C is not covered with a casing and the like, and is exposed to the waste water that contains oil in immersed membrane tank 2. The waste water that contains oil and that comes into contact with the sidewall of hollow fiber membrane filter 3C from outside of hollow fiber membrane filter 3C is filtered by the sidewall of hollow fiber membrane filter 3C, and oil and the like stays outside of the sidewall. The filtered water, from which oil and SS (hereinafter, referred to as oil etc.) have been removed or reduced, enters the inner space of hollow fiber membrane filter 3C. In the following descriptions, the space outside of hollow fiber membrane filter 3C is referred to as primary space 9, and the space inside of hollow fiber membrane filter 3C is referred to as secondary space 10. There are no limitations on the type of material that may be used for hollow fiber membrane filter 3C as long as it is hydrophilic, but, for example, PTFE (polytetrafluoroethylene), PES (polyether sulfone), PAN (polyacrylonitrile) and the like may be used. Fig. 1 is a schematic view and only two hollow fiber membrane filters 3C are shown.

Means for supplying waste water 4 that contains oil includes oil containing waste water supply line 4A that supplies the waste water that contains oil to immersed membrane tank 2. Means for supplying oil containing waste water 4 has a capacity for supplying the waste water that contains oil that is enough to immerse filter membrane apparatus 3 with the waste water that contains oil.

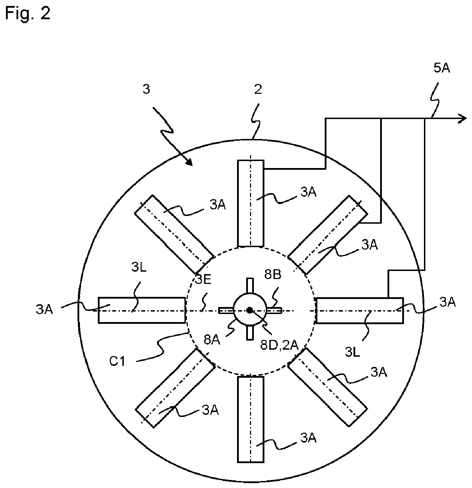

Agitating means 8 is provided in immersed membrane tank 2. Agitating means 8 agitates the waste water that contains oil that is stored in immersed membrane tank 2. Agitating means 8 is agitator 8 having rotational shaft 8A and agitating blades 8B that are fixed to rotational shaft 8A. Rotational shaft 8A extends in the vertical direction, that is, in the direction perpendicular to the liquid surface of immersed membrane tank 2. The center of rotational shaft 8A of agitator 8 is coaxial with center axis 2A (see Fig. 2) of immersed membrane tank 2. Rotational shaft 8A is rotationally driven by means of motor 8C, so that agitating blades 8B agitate the waste water that contains oil in immersed membrane tank 2, thereby prevent the oil etc. from sedimenting and floating, and enhance the filtering efficiency. In addition, the solid matters that contain oil are prevented from adhering to the filter surface of filter membrane apparatus 3 and the side surfaces of immersed membrane tank 2. The rotational velocity of agitator 8 is preferably 30 to 3000 in G value from the standpoint of preventing the adhesion of solid matters that contain oil, and is more preferably 100 to 2000 from the standpoint of economy. The G value is an indicator of energy in agitation, which can be expressed by the following formula.

$$G = (P/ (V \times m))^{0.5}$$

P : agitation energy (W)
V : volume of the agitation tank (immersed membrane tank 2) (m$^3$)
m : viscosity coefficient of the liquid that is agitated (kg/(m·s))

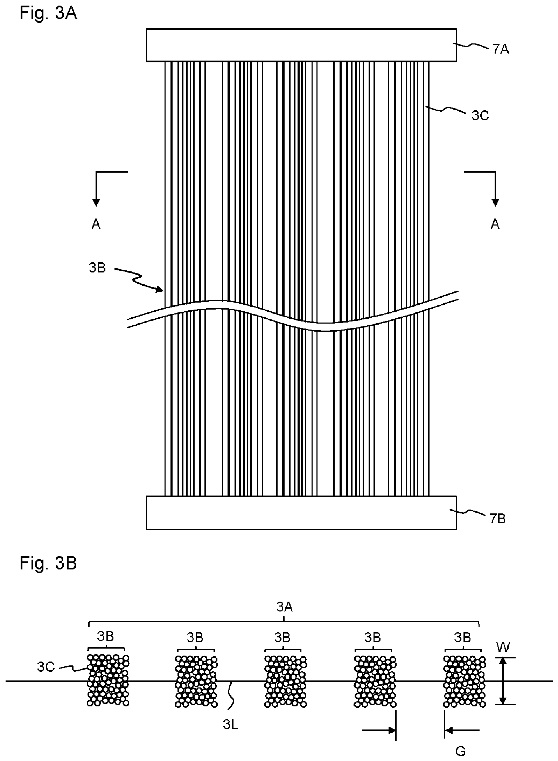

Fig. 2 shows a top view of immersed membrane tank 2, i.e., a section that is parallel to the liquid surface of the waste water that contains oil. Fig. 3A shows a side view of filter membrane module 3A, and Fig. 3B shows a sectional view of filter membrane module 3A along line A-A in Fig. 3A, *i.e.,* a section that is parallel to the liquid surface of the waste water that contains oil. Filter membrane apparatus 3 has filter membrane modules 3A each having a plurality of hollow fiber membrane filters 3C. Each filter membrane module 3A is connected to suction line 5A (partially shown). Filter membrane modules 3A have elongate shapes each having long axis 3L, as viewed in plane P that is parallel to the liquid surface of the waste water that contains oil. Filter membrane modules 3A radially extend from center 8D of rotational shaft 8A of agitator 8. In other words, extension 3E of long axis 3L of each filter membrane module 3A passes through center 8D of rotational shaft 8A of agitator 8. Long axes 3L of filter membrane modules 3A extend in a direction away from coaxial circle C1, that is coaxial with center 8D of rotational shaft 8A of agitator 8, from circumferentially different positions on coaxial circle C1. In the present embodiment, eight filter membrane modules 3A are arranged in a rotational symmetric pattern at an interval of 45 degrees. However, the number of filter membrane modules 3A is not limited to eight, and filter membrane modules 3A may not be arranged at the same interval. In addition, all of filter membrane modules 3A extend radially outward from one coaxial circle C1, but they may extend from different coaxial circles C1. In other words, the distances of filter membrane modules 3A from center 8D of rotational shaft 8A may be different from each other.

As shown in Fig. 3B, each filter membrane module 3A is divided into a plurality of sub modules 3B along long axis 3L with gap G therebetween. Each sub module 3B is made of a bundle in which hollow fiber membrane filters 3C are bundled. In each sub module 3B, hollow fiber membrane filters 3C are arranged densely with irregular gaps therebetween, and hollow fiber membrane filters 3C may be even in contact with each other. Thus, it is difficult to precisely control the shape of the flow channel in each sub module 3B. On the other hand, gap G between sub modules 3B is adjustable, and it is thus ensured that the waste water that contains oil flows through the gap between sub modules 3B, and thereby prevents the solid matters that contain oil from adhering to sub modules 3B. The number of sub module 3B, the length of sub module 3B in the longitudinal direction, and gap G between sub modules 3B are not particularly limited, and may be determined as needed, and gap G is preferably equal to or more than width W of sub module 3B. In order to increase the flow between sub modules 3, it is preferable not to arrange agitating blades 8B and filter membrane modules 3A in the same section. The length of sub module 3B may be increased, that is, gap G may be narrowed because the adhesion of the solid matters that contain oil is less likely to occur where waste water that contains oil flows at a large velocity in immersed membrane tank 2. Instead of forming one filter membrane module 3A by a plurality of sub modules 3, each sub module 3B may be scattered in immersed membrane tank 2. However, taking into consideration the arrangement, installation and replacement of jigs for fixing filter membrane apparatus 3 in immersed membrane tank 2, filter membrane module 3A is a more preferable form. In order to prevent filter membrane module 3A from contacting agitator 8, a protection fence (not shown) may be provided between filter membrane module 3A and agitator 8. The protection fence typically has a lattice shape, but the shape is not limited as long as it does not hinder the water flow generated by agitator 8.

Suction line 5A is connected to secondary space 10 of hollow fiber membrane filter 3. Suction pump 5B that sucks filtered water to secondary space 10 is provided on suction line 5A. Suction line 5A and suction pump 5B form suction means 5 for filtered water. By increasing suction flux (the flux of the filtered water generated by suction: flow rate per unit area), treatment capacity can be increased and the number of hollow fiber membrane filters 3C can be reduced, but the solid matters that contain oil and that adhere to the filter surface may be tightly compressed by highly viscous oil components, and a sharp increase in suction pressure may be caused. In case of scrubber waste water that is discharged from an exhaust gas scrubber, the suction flux is preferably about 0.1 to 1m/d. Although not illustrated, the filtered water may be sucked by means of pressure head. For example, by vertically arranging suction line 5A in order to allow the filtered water to flow downwards, a driving force to suck the filtered water to secondary space 10 can be obtained.

The filtered water that is sucked to secondary space 10 can be discharged to the outside of the system after it is confirmed that the water meets predetermined water quality criteria. A part of the filtered water is stored for use as backwashing water in filtered water tank 6 that is connected to suction line 5A. Backwash line 11 is connected to filtered water tank 6 (backwash line 11 is shown as a broken line in Fig. 1 in order to distinguish it from suction line 5). Backwash line 11 merges with suction line 5A between hollow fiber membrane filter 3C and suction pump 5B. Backwash pump 12 that feeds the backwashing water is provided on backwash line 11. During backwashing, the filtered water that is stored in filtered water tank 6 is supplied to secondary space 10 of hollow fiber membrane filter 3C through backwash line 11, and the oil etc. that adheres to the filter surface of hollow fiber membrane filter 3C is peeled off from the filter surface, so as to be released to primary space 9. When utility water is available, such as when filtering apparatus 1 is installed on a ship, the utility water may be used as backwashing water. Although not illustrated, suction pump 5B may be unified with backwash pump 12 by rearranging suction line 5A and backwash line 11 and by switching suction line 5A and backwash line 11 by valves.

Drain line 13 to discharge the waste water that contains oil in the tank is connected to the bottom of immersed membrane tank 2. Drain line 13 is connected to waste water storage tank 14 that stores waste water that contains oil that is supplied from immersed membrane tank 2, and drain pump 15 to feed the waste water that contains oil to waste water storage tank 14 is provided on drain line 13. Further, circulating line 16 is provided that branches from drain line 13 downstream of drain pump 15 and that is connected to immersed membrane tank 2 upstream of drain pump 15. Water circulating line 16 may be omitted depending on the water quality of the waste water that contains oil. Highly concentrated waste water that contains oil is discharged from drain line 13, and the possibility that drain line 13 will become clogged can be reduced by circulating the waste water that contains oil through circulating line 16. The process of extracting the waste water that contains oil from immersed membrane tank 2 to drain line 13 may be carried out continuously or intermittently. Alternatively, the concentration of the SS and the concentration of the waste water that contains oil in immersed membrane tank 2 may be measured, and the waste water that contains oil may be extracted when either one or both of these reach a predetermined reference value. Waste water storage tank 14 has drain line 17 that extracts the waste water that contains oil. Agents, such as a surfactant, may be added to drain line 13 from agent tank 18 via agent supply line 19. Agent supply pump 20 is arranged on agent supply line 19. By adding a surfactant to the waste water that contains oil, the possibility that drain line 13 is clogged with the waste water that contains oil can be further reduced. Waste water storage tank 14, drain pump 15 and circulating line 16 may be omitted, and the waste water that contains oil that is discharged from drain line 13 may be disposed of. It is also possible to omit drain line 13 and to suck the waste water that contains oil that is stored in immersed membrane tank 2 by a pump (not shown).

Filtering apparatus 1 operates in the following manner. The waste water that contains oil from the exhaust gas scrubber is supplied to immersed membrane tank 2 through oil containing waste water supply line 4. The waste water that contains oil is moved from primary space 9 of hollow fiber membrane filter 3C to secondary space 10, and the oil etc. is caught by hollow fiber membrane filter 3C by the suction pressure of suction pump 5B. During this process, the waste water that contains oil in immersed membrane tank 2 is agitated in the horizontal and vertical directions by agitator 8. Due to the water flow that is generated by agitation, shear force acts on the membrane surface of hollow fiber membrane filter 3C. The shear force prevents the solid matters that contain oil from adhering to the membrane surface, and the solid matters that contain oil and that adhere to the membrane surface are more easily peeled off. In other words, according to the present embodiment, the waste water that contains oil is introduced to immersed membrane tank 2 that houses filter membrane apparatus 3, and filter membrane apparatus 3 is immersed with the waste water that contains oil. Then, the waste water that contains oil is filtered by filtering apparatus 1 while the waste water that contains oil that is introduced to immersed membrane tank 2 is agitated by agitator 8 that is provided in immersed membrane tank 2. It should be noted that, for the purpose of peeling off the solid matters that contain oil more easily, an inverter (not shown) may be provided in motor 8C of agitator 8 in order to change the rotational velocity of agitator 8, or a switching device (not shown) may be provided in order to change the rotational direction of agitator 8. An air blow port (not shown) for an aeration operation may also be provided on the bottom of immersed membrane tank 2.

After the filtration step is performed by operating suction pump 5B for a certain time period, it is preferable to stop suction pump 5B, to switch valves (not shown) and to perform backwashing through backwash line 11 for a short time (this backwashing is referred to as simple backwashing). By repeating a set of the filtration and the simple backwashing, and by agitating the waste water that contains oil by agitator 8, the filtration step can be performed while maintaining the performance of hollow fiber membrane filter 3. The effect of the backwashing can be enhanced by agitating the waste water that contains oil in immersed membrane tank 2 by agitator 8 during the simple backwashing.

As mentioned above, since immersed membrane tank 2 is circular and agitator 8 is arranged at the center of immersed membrane tank 2, the waste water that contains oil will not stay at the corners unlike a rectangular immersed membrane tank, and velocity equal to or more than a certain value will be ensured in the entire area of immersed membrane tank 2. In addition, due to the elongate shape, filter membrane module 3A functions, as a whole, as a kind of a baffle plate. This complicates the water flow and allows the water flow to reach a space between filter membrane modules 3A, as well as an area near the sidewalls of immersed membrane tank 2.

(Second embodiment)

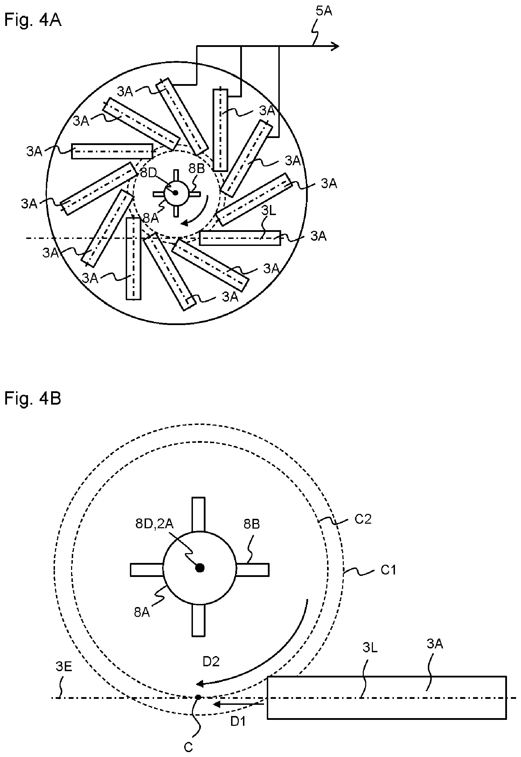

Fig. 4A shows a top view similar to Fig. 2 of immersed membrane tank 2 of filtering apparatus 1 according to the second embodiment of the present invention, and Fig. 4B shows a partial enlarged view of Fig. 4A. In the present embodiment, long axes 3L of filter membrane modules 3A also extend in a direction away from coaxial circle C1, that is coaxial with center 8D of rotational shaft 8A of agitator 8, from circumferentially different positions on coaxial circle C1. However, extension 3E of long axis 3L of each filter membrane module 3A is tangential to another coaxial circle C2 that is coaxial with coaxial circle C1 and that has a smaller diameter than coaxial circle C1. As a result, filter membrane modules 3A are arranged like an impeller about rotational shaft 8A of agitator 8. In the present embodiment, twelve filter membrane modules 3 A are arranged in a rotational symmetric pattern at an interval of 30 degrees. However, the number of filter membrane modules 3A may be any number other than twelve, and may not be arranged at the same interval. Further, all of filter membrane modules 3A extend radially outwards from one coaxial circle C1, but may extend from different coaxial circles. In other words, the distances of filter membrane modules 3A from center 8D of rotational shaft 8A may be different from each other.

Rotational shaft 8A of agitator 8 preferably rotates clockwise in Figs. 4A and 4B. More generally, rotational shaft 8A of agitator 8 preferably rotates such that, at point of contact C of extension 3E of each filter membrane module 3A with another coaxial circle C2, direction D1 of extension 3E directed from each filter membrane module 3A toward point of contact C coincides with direction D2 of the flow that is induced by agitator 8. This causes the water flow to be applied to filter membrane module 3A in a direction substantially perpendicular to the radial side surface of each filter membrane module 3A in the radially inner region of each filter membrane module 3A, and more effectively prevents the adhesion of the solid matters that contain oil. According to the present embodiment, filter membrane modules 3A can be arranged more efficiently, and a larger number of filter membrane modules 3A can be arranged than in the first embodiment. Filter membrane module 3A of the present embodiment has the same shape and dimensions as filter membrane module 3A of the first embodiment, and the size of immersed membrane tank 2 is the same as that of the first embodiment, but in the present embodiment, twelve filter membrane modules 3A can be housed in immersed membrane tank 2.

(Third embodiment)

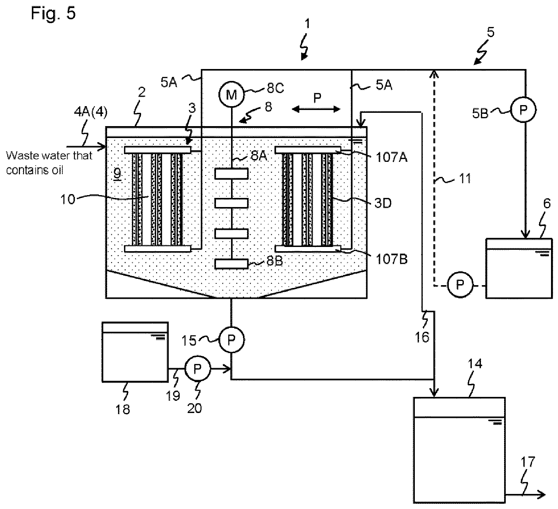

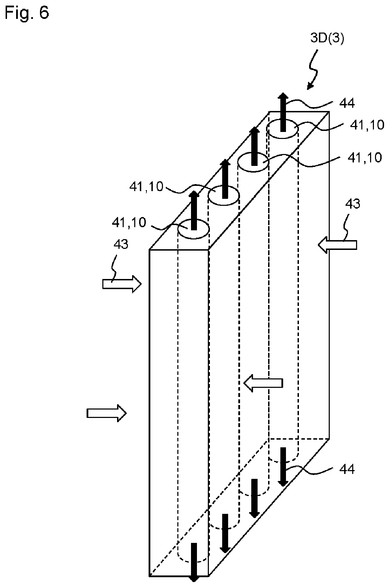

Fig. 5 shows the schematic arrangement of filtering apparatus 1 according to the third embodiment of the present invention. The present embodiment is different from the first embodiment in that ceramic membrane 3D is used as filter membrane module 3A of filter membrane apparatus 3 and is the same as the first embodiment in the other arrangements. A gap that allows the waste water that contains oil to pass through is provided between adjacent ceramic membranes 3D. Ceramic membrane 3D is preferably a hydrophilic membrane. Ceramic membranes 3D are exposed and are housed in immersed membrane tank 2. Although not illustrated, ceramic membranes 3D are arranged in immersed membrane tank 2 in the same manner as shown in Figs. 2 and 4A. Fig. 6 shows the schematic arrangement of ceramic membrane 3D. Ceramic membrane 3D is a flat membrane made of ceramic, and flow channels 41 where the waste water that contains oil flows are formed therein. Flow channels 41 form secondary space 10 of ceramic membrane 3D. Both ends of flow channel 41 are open at the side surfaces of ceramic membrane 3D, and water collecting pipes 107A and 107B (see Fig. 5) are connected to both ends. Water collecting pipes 107A and 107B are connected to suction line 5A. The waste water that contains oil permeates from the outer surfaces of ceramic membrane 3D to the inside through countless pores in the ceramic, as shown by arrows 43. Oil etc. having large diameters stay on the outer surfaces of ceramic membrane 3D, and oil etc. having small diameters are caught in the small pores in the ceramic. Filtered water, from which oil etc. is sufficiently removed, is collected by channel 41, and the filtered water is discharged from flow channel 41, as shown by arrows 44. Although not illustrated, ceramic membrane 3D may be divided into a plurality of sub modules along long axis 3L with a gap therebetween in the same manner as the first embodiment.

(Fourth embodiment)

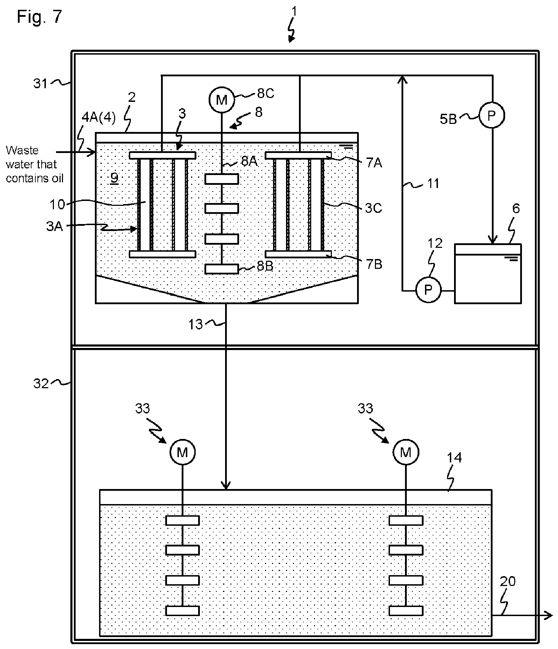

Fig. 7 shows the schematic arrangement of filtering apparatus 1 according to the fourth embodiment of the present invention. Filtering apparatus 1 is divided and is housed in upper container 31 and lower container 3. Specifically, immersed membrane tank 2 and filtered water tank 6 are housed in upper container 31, and waste water storage tank 14 is housed in lower container 32. In the present embodiment, two agitators 33 that agitate waste water that contains oil are arranged in waste water storage tank 14. Drain line 13, drain pump 15 and circulating line 16 may be provided in the same manner as in the first embodiment. Further, agent tank 17, agent supply line 18 and agent supply pump 19 may be provided in the same manner as in the first embodiment. Lower container 32 is arranged below, preferably immediately below, upper container 31, and drain line 13 extends between upper container 31 and lower container 32. Lower container 32 may be arranged apart from upper container 31, and in that case, a transfer pump (not shown) may be provided on drain line 13.

When filtering apparatus 1 is installed, for example, on a container ship, upper container 31 and lower container 32 preferably have the same dimensions and shape as typical containers that are mounted on the container ship. As a result, the limitation on where upper container 31 and lower container 32 are arranged may be eased. Filtering apparatus 1 is divided and is arranged in upper container 31 and lower container 32 at a factory in advance, and is transported by a car or a freight train. Upper container 31 and lower container 32 are combined on the ship and are connected to each other by drain line 13. When upper container 31 and lower container 32 are transported, a typical truck, trailer or freight train for transporting containers can be used, and when they are installed, a crane for mounting containers, with which a ship or a port facility is equipped, can be used. Accordingly, a special facility or apparatus is not required for transportation and installation. Further, since they are prefabricated at a factory, the step of installation on a ship is shortened.

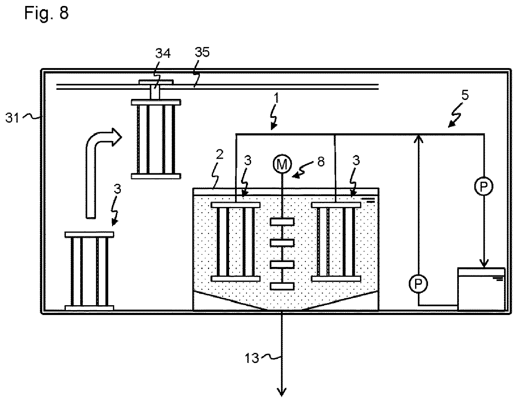

Fig. 8 shows the schematic arrangement of filtering apparatus 1 according to a modification of the fourth embodiment. Fig. 8 only shows upper container 31, but lower container 32 may be the same as that of the fourth embodiment. In the modification, crane 34 is provided in the upper space of upper container 3. Crane 34 is used to install filter membrane apparatus 3 in immersed membrane tank 2 and to remove filter membrane apparatus 3 from immersed membrane tank 2. As crane 34, a chain block or a hoist that can travel along monorail 35 that is provided on the ceiling of upper container 31 is preferably used, but any other types of cranes may also be used. When filtering apparatus 1 is arranged on a ship and when the ship is navigating or at a port, removal of filter membrane apparatus 3 from immersed membrane tank 2 and installation of filter membrane apparatus 3 in immersed membrane tank 2 may be required for replacement or maintenance of filter membrane apparatus 3. Since it is difficult to handle filter membrane apparatus 3 with human power, some kind of a crane facility is required, but it may be difficult to use such a facility in a ship. In the present embodiment, due to crane 34 that is provided in upper container 31, maintainability is improved, and limitation on the installation area (for example, filtering apparatus 1 needs to be arranged near the crane of the ship) is eased.

(Fifth embodiment)

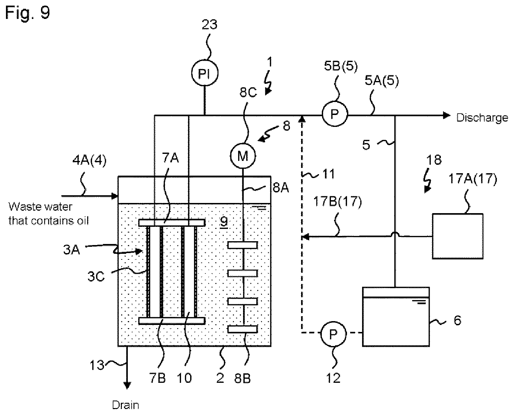

Fig. 9 shows the schematic arrangement of filtering apparatus 1 according to the fifth embodiment of the present invention. Filtering apparatus 1 according to the fifth embodiment has substantially the same arrangement as filtering apparatus 1 according to the first embodiment. Fig. 9 shows only one filter membrane module 3A. Pressure gauge 23 that measures the pressure of suction line 5A, *i.e.,* the suction pressure, is provided on suction line 5A that is connected to secondary space 10 of hollow fiber membrane filter 3A. The differential pressure in hollow fiber membrane filter 3C (the pressure difference between primary space 9 and secondary space 10) may be calculated based on the measurement of pressure gauge 23 and on the liquid level of immersed membrane tank 2.

Filtering apparatus 1 has agent storage tank 17A and agent supply line 17B that connects agent storage tank 17A to backwash line 11. Agent storage tank 17A and agent supply line 17B form agent supply means 17. Further, agent supply means 17, immersed membrane tank 2 and backwash line 11 form apparatus 18 for regenerating filter membrane apparatus 3. Apparatus 18 for regenerating filter membrane 3 regenerates hollow fiber membrane filter 3C that is immersed with waste water that contains oil and that filters the waste water that contains oil. The agent contains a surfactant, and preferably further contains sodium hydroxide.

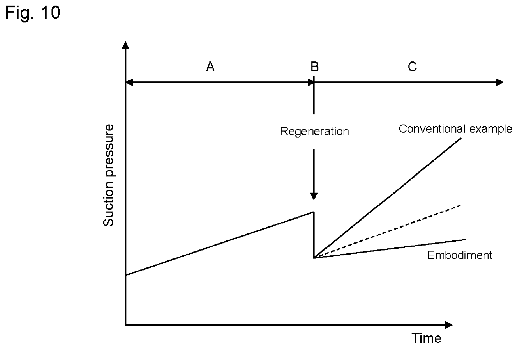

Filtering apparatus 1 of the present embodiment operates in the same manner as filtering apparatus 1 of the first embodiment. However, since the effect of the simple backwashing is limited, oil etc. adheres, with time, to the filter surface of hollow fiber membrane filter 3C that faces primary space 9 in the form of cake. Thus, conventionally, after an operation having a set of filtration and simple backwashing is performed for a certain time, washing or regeneration using water flow or an agent is performed in order to remove the solid matters that contain oil and that have adhered to the filter surface, and then the waste water that contains oil is filtered again by the regenerated hollow fiber membrane filter. Fig. 10 schematically shows a change of suction pressure before and after the hollow fiber membrane filter is regenerated by the conventional method. A new hollow fiber membrane filter was used for filtration. Solid matters that contain oil adhere to the filter surface of the hollow fiber membrane filter with time, and the suction pressure increases (filtration step A). When the suction pressure reaches a certain level, regeneration is performed (B in Fig. 10). With this operation, the solid matters that contain oil and that have adhered to the filter surface of hollow fiber membrane filter are removed, and the suction pressure is regained. After filtration is performed, the suction pressure increases again (filtration step C). However, the suction pressure increases sharply, as compared to the previous filtration step. In other words, the suction pressure increases at a larger increasing rate than the increasing rate (shown by the broken line) in the previous filtration step (filtration step A), as shown Fig. 10.

On the other hand, in the present embodiment, hollow fiber membrane filter 3C that filtered waste water that contains oil is regenerated by an agent that includes a surfactant during the backwashing. Surfactants include ionic surfactants and nonionic surfactants, and the ionic surfactants are classified into anionic surfactants, cationic surfactants and amphoteric surfactants. Any kind of surfactants can be applied as the surfactant of the present invention, but nonionic surfactants or anionic surfactants are preferably used from the standpoint of affinity with suspended substances and oil that are contained in the waste water. As nonionic surfactants, surfactants that mainly contain polyoxyalkylene alkyl ether (for example, SEDRAN (Sanyo Chemical Industries, Ltd.)), surfactants that mainly contain polyoxyethylene fatty acid ester or polyoxyethylene fatty acid monoester (for example, IONET (Sanyo Chemical Industries, Ltd.)) are preferably used. As anion surfactants, surfactants that mainly contain dodecyl dimethylamine oxide or sodium dodecyl sulfate (for example, MCL-20 (Sumitomo Electric Industries, Ltd.)) are preferably used. In addition, surfactants that contain both a nonionic surfactant and an anionic surfactant (for example, Pink soap (monotaRO Co.,Ltd.)) are also preferably used.

The agent is added to the backwashing water via agent supply line 17B. As shown in Fig. 10, the suction pressure is decreased (recovered) to about the same pressure level as in the conventional example, and the difference of the suction pressure between the present embodiment and the conventional example is small immediately after the regeneration (B in Fig. 10). However, in the present embodiment, the increase of the suction pressure is slower than that of the conventional example in the subsequent filtration step, and the increasing rate of the suction pressure is smaller than the increasing rate (the broken line) in the previous filtration step (filtration step A).

The reason is considered as follows. The solid matters that contain oil are not completely removed by the agent both in the present embodiment and in the conventional example (the filter surface of hollow fiber membrane filter 3C does not return to a brand-new state). Therefore, in the conventional example, new oil etc. easily adheres to a small amount of the oil etc. that still adheres (remains), and the adhesion of the oil etc. progresses more quickly than in the brand-new state. As a result, the suction pressure sharply increases. On the other hand, in the present embodiment, since a small amount of the oil etc. that still adheres (remains) is covered with a surfactant, and -OH groups, which are hydrophilic groups, are formed on the surface, the adhesion of the new oil etc. is less likely to occur. In other words, the surface of the oil etc. that has adhered to the filter surface of hollow fiber membrane filter 3C is, so to speak, modified by the surfactant, and the adhesion of the new oil etc. is less likely to occur.

The timing of the backwashing (the timing of regeneration using the agent) is not particularly limited, but the backwashing is preferably performed when the amount of the oil etc. that has adhered to the filter surface of hollow fiber membrane filter 3C is small. The timing of the backwashing is, for example, when the pressure of secondary space 10 that is measured by pressure gauge 23 is less than a predetermined value (when the differential pressure between primary space 9 and secondary space 10 exceeds a predetermined value) or when the flow rate of suction line 5A is less than a predetermined value. Alternatively, the thickness of the solid matters that contain oil that have adhered to the filter surface of hollow fiber membrane filter 3C may be measured using an image taken by a camera. Under a typical operational condition, performing the regeneration using an agent once in several hours or once in several days is sufficient.

Further, the waste water that contains oil around hollow fiber membrane filter 3C (an example of liquid around filter membrane apparatus 3 that contains the agent) may be agitated by agitating means 8 during the backwashing. Due to the effect of the agitation, the solid matters that contain oil are easily peeled off from the filter surface. Further, the waste water that contains oil in immersed membrane tank 2 may be drained from drain line 13 prior to the backwashing.

Conventionally, flocculant filtration or diatomaceous earth filtration may be performed in order to ensure a channel for the waste water that contains oil to flow, as disclosed in JP H4-190808. In these methods, flocculant or diatomaceous earth having large diameters adheres to the filter surface of the filter membrane, and easily ensures a channel for the waste water that contains oil to flow. However, since the flocculant filtration and the diatomaceous earth filtration require regular replenishment of flocculant or diatomaceous earth, it is difficult to reduce operation cost and waste. The present embodiment can provide a method for regenerating filter membrane apparatus 3 that is economical and that generates only a small amount of waste.

As describe above, hollow fiber membrane filter 3C is used as filter membrane apparatus 3 in the present embodiment. When ceramic membrane 3B is used, a similar effect can be obtained by backwashing and regeneration using a surfactant containing agent.

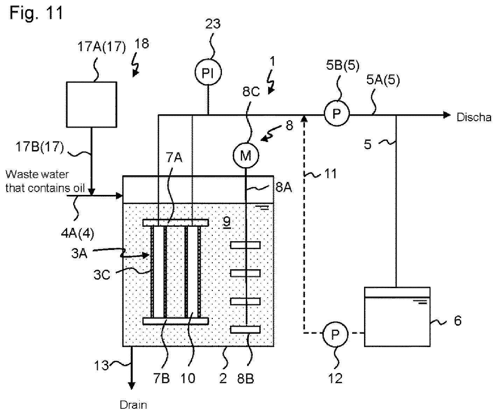

Fig. 11 shows the schematic arrangement of filtering apparatus 1 according to the sixth embodiment of the present invention. In the present embodiment, an agent is injected to oil containing waste water supply line 4A. When filter membrane apparatus 3 is regenerated, filter membrane apparatus 3 is backwashed while the waste water that contains oil to which the agent is added is supplied to oil containing waste water supply line 4A. In other words, filter membrane apparatus 3 is backwashed while new waste water that contains oil is added to the waste water that contains oil, that immerses filter membrane apparatus 3, via oil containing waste water supply line 4A, and the agent is added to the new waste water that contains oil. In this operation, the waste water that contains oil around filter membrane apparatus 3 (an example of liquid around filter membrane apparatus 3 that contains the agent) may be agitated by agitating blades 14. According to the present embodiment, the oil etc. that accumulates on the membrane surface is partially peeled off by the backwashing, and the surfactant adheres to oil etc. that stays on the membrane surface. Since new oil etc. is less likely to accumulate due to this operation, filtration pressure increases slowly. However, since the oil etc. is only partially peeled off by the backwashing, it is preferable to drain the water in the immersion tank first in order to expose the membrane and then to wash off the oil etc. by blowing and lastly to cause the surfactant to contact the membrane. Filter membrane apparatus 3 may be hollow fiber membrane filter 3C or may be ceramic membrane 3D.

As a modification of the sixth embodiment, the waste water that contains oil that immerses filter membrane apparatus 3 may be drained first via drain line 13, and waste water that contains oil to which an agent is added may be supplied from waste water that contains oil supply line 4A to immersed membrane tank 2. Filter membrane apparatus 3 is immersed again with the waste water that contains oil to which the agent is added. In this operation, the waste water that contains oil around filter membrane apparatus 3 (an example of liquid around filter membrane apparatus 3 that contains the agent) may be agitated by agitating means. The present modification may be carried out by using filtering apparatus 1 having the same arrangement as filtering apparatus 1 according to the sixth embodiment. The present modification has the same effect as the sixth embodiment.

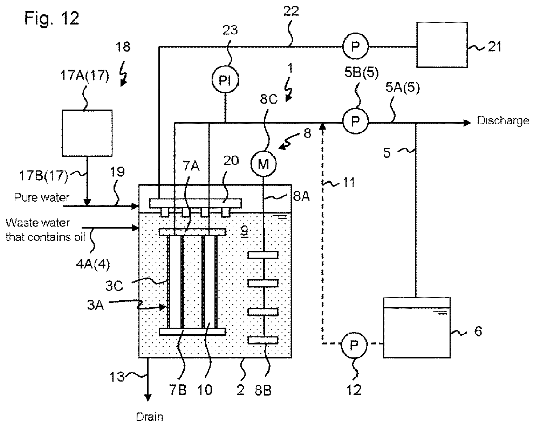

Fig. 12 shows the schematic arrangement of filtering apparatus 1 according to the seventh embodiment of the present invention. In the present embodiment, first pure water supply line 19 is connected to immersed membrane tank 2. Agent supply line 17B merges with first pure water supply line 19, and pure water to which agent is added is supplied from first pure water supply line 19. Further, pure water blower 20 is provided in the upper part of immersed membrane tank 2. Blower 20 is connected to pure water tank 21 via second pure water supply line 22. There is no particular limitation on the type of blower 20 as long as it can blow pure water on filter membrane apparatus, but spraying means having many nozzles and the like may be used. In the present embodiment, in immersed membrane tank 2 that stores waste water that contains oil, the pure water that is stored in pure water tank 21 is blown on filter membrane apparatus 3 by blower 20 via second pure water supply line 2. With this operation, filter membrane apparatus 3 can be exposed in advance. Pure water is preferably blown downward from above filter membrane 3 in order to let solid matters that contain oil fall. With this operation, the solid matters that contain oil that have adhered to the membrane surface are partially peeled off. Next, the waste water that contains oil in immersed membrane tank 2 is drained via drain line 13. Thereafter, pure water to which the agent is added is supplied from first pure water supply line 19 to immersed membrane tank 2 in order to immerse filter membrane apparatus 3 again. In this operation, the pure water to which the agent is added around filter membrane apparatus 3 (an example of liquid around filter membrane apparatus 3 that contains the agent) may be agitated by agitating means 8. Blower 20 may be omitted. In this case, after the waste water that contains oil in immersed membrane tank 2 is drained via drain line 13, pure water to which the agent is added is supplied from first pure water supply line 19 to immersed membrane tank 2 in order to immerse filter membrane apparatus 3 again. Filter membrane apparatus 3 may be hollow fiber membrane filter 3C or may be ceramic membrane 3D.

(Example)

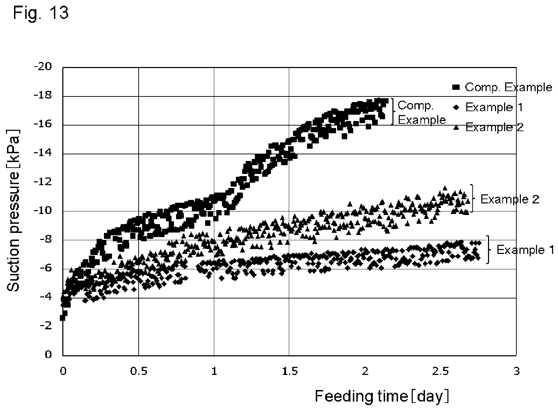

Using filtering apparatus 1 shown in Fig. 9, the first filtration step, the step of regenerating the hollow fiber membrane filter 3C and the second filtration step were performed, and a change of the suction pressure was measured. Specifically, a liquid that contains carbon black is used as the waste water that contains oil, and after the suction pressure was increased to reach a predetermined value, hollow fiber membrane filter 3C was immersed with an agent containing regeneration liquid for about three hours, and thereafter the second filtration step was performed. In the first and second filtration steps, a set of filtration of about 30 minutes and backwashing of about one minute was repeated. In Example 1, a regeneration liquid that contains a surfactant (mainly contains dodecyl dimethylamine oxide) and sodium hydroxide of 1% concentration was used, and in Example 2, a regeneration that only contains a surfactant (mainly contains dodecyl dimethylamine oxide) was used. As the regeneration liquid, water in which an agent is dissolved was used. In Comparative Example, regeneration using the agent was not performed and only washing by water flow was performed. Fig. 13 shows the relationship between water feeding time (unit: day) from the start of the second filtration step and the suction pressure. In Comparative Example, the suction pressure gradually increases as the water feeding days progress. In Examples 1 and 2, the suction pressure gradually increases, but the rate of increase is smaller than that of Comparative Example. In particular, Example 1 shows the minimum rate of increase of the suction pressure. Since an agent that contains sodium hydroxide is used in Example 1, it is thought that the decomposition of oil etc. is promoted by hydrolysis of sodium hydroxide. However, as shown in Example 2, in which sodium hydroxide is not used, the increase of the suction pressure is limited, as compared to Comparative Example, and the effect of the present invention can be obtained.

The present invention has been described by some embodiments, but the present invention is not limited to these. For example, the present embodiments are directed to a filtering apparatus that filters waste water that contains oil and a method for regenerating a filter membrane that filters waste water that contains oil, but the present invention may also be used for a filtering apparatus that filters a liquid that contains a highly viscous material other than oil and a method for regenerating a filter membrane that filters a liquid that contains a highly viscous material other than oil. When a highly viscous material adheres to the filter surface of a filter membrane, the adhering material clogs the membrane or increases suction pressure in the same manner as in the present embodiment.

Further, agitator 8 is used as agitating means 8 in the present embodiment, but agitating means 8 is not limited to agitator 8 as long as waste water that contains oil that is introduced to immersed membrane tank 2 can be agitated. For example, waste water that contains oil can be agitated by a circulating line, that is arranged outside of immersed membrane tank 2, and a circulating pump that is provided on the circulating line. Alternatively, a circulating pump may be arranged in immersed membrane tank 2. Alternatively, air distributing nozzles may be provided on the bottom of immersed membrane tank 2, and air may be supplied to the distributing nozzles by a blower or the like in order to agitate the waste water that contains oil with the air. Alternatively, waste water that contains oil may be agitated by an agitator that is arranged on the side surface of immersed membrane tank 2. Agitating means 8 may be formed from one or a combination of these means or from a combination of these means and agitator 8.

Further, the sectional shape of immersed membrane tank 2 is circular in the present embodiment, but any shape other than circular, such as oval, may be used as long as the entire area of immersed membrane tank 2 is well agitated by agitating means 8. Instead of arranging agitator 8 at the center of immersed membrane tank 2, agitator 8 may be arranged a little eccentrically, or two or more agitators 8 may be arranged.

Further, the filter membrane is regenerated using immersed membrane tank 2 in the present embodiment, but the filter membrane may be regenerated by a dedicated regeneration tank. In other words, when a filter membrane is regenerated, the filter membrane may be removed from immersed membrane tank 2, then immersed with a regeneration liquid that contains a surfactant, preferably, sodium hydroxide, and the regenerated filter membrane may be returned to immersed membrane tank 2. When a filter membrane apparatus needs to be operated continuously, filter membrane apparatuses may be arranged in parallel. By isolating a system that needs regeneration, the operation of the filter membrane apparatus and the regeneration of the isolated filter membrane apparatus can be simultaneously performed.

Filtering apparatus 1 according to the fifth to seventh embodiments has agitating means 8 in the same manner as filtering apparatus 1 according to the first to fourth embodiments, but the inventions according to the fifth to seventh embodiments can also be carried out using a filtering apparatus that does not have agitating means 8.

Although certain preferred embodiments of the present invention have been shown and described in detail, it should be understood that various changes and modifications may be made without departing from the spirit or scope of the appended claims.

**Claims**

**1.** A method for operating and regenerating a filter membrane apparatus (3) of a filtering apparatus (1), the method comprising the steps of:

> filtering waste water that contains oil by a filter membrane apparatus (3); and
> regenerating the filter membrane apparatus (3) with an agent that contains a surfactant, wherein the filter membrane apparatus (3) has filtered the waste water that contains oil.

2. The method for operating and regenerating a filter membrane apparatus (3) according to claim 1, wherein the agent contains sodium hydroxide.

3. The method for operating and regenerating a filter membrane apparatus (3) according to claim 1 or 2, further comprising the steps of:
backwashing the filter membrane apparatus (3), wherein the agent is added to backwashing water.

4. The method for operating and regenerating a filter membrane apparatus (3) according to claim 1 or 2, further comprising the steps of:
backwashing the filter membrane apparatus (3) while adding new waste water that contains oil to the waste water that contains oil that immerses the filter membrane apparatus (3), wherein the agent is added to the new waste water that contains oil.

5. The method for operating and regenerating a filter membrane apparatus (3) according to claim 1 or 2, wherein the waste water that contains oil that immerses the filter membrane apparatus (3) is drained, and thereafter the filter membrane apparatus (3) is immersed again with waste water that contains oil to which the agent is added.

6. The method for operating and regenerating a filter membrane apparatus (3) according to claim 1 or 2, wherein the waste water that contains oil that immerses the filter membrane apparatus (3) is drained, and thereafter the filter membrane apparatus (3) is immersed again with pure water to which the agent is added.

7. The method for operating and regenerating a filter membrane apparatus (3) according to any one of claims 3 to 6, wherein liquid around the filter membrane apparatus (3) is agitated, and wherein the liquid contains the agent.

8. A method for filtering waste water that contains oil, the method comprising the steps of:

> immersing a filter membrane apparatus (3) with waste water that contains oil, and filtering the waste water that contains oil that immerses the filter membrane apparatus (3) by means of the filter membrane apparatus (3);
> regenerating the filter membrane apparatus (3) by the method for operating and regenerating a filter membrane apparatus (3) according to any one of claims 1 to 7, wherein the filter membrane apparatus (3) has filtered the waste water that contains oil; and
> filtering waste water that contains oil by the filter membrane apparatus (3) that was regenerated.

9. An apparatus for regenerating a filter membrane apparatus (3), comprising:

> an immersed membrane tank (2) that houses the filter membrane apparatus (3); and
> supply means (17) that supplies an agent that contains a surfactant and that regenerates the filter membrane apparatus (3) to the immersed membrane tank (2).

Fig. 1

Fig. 2

Fig. 3A

7A

3C

A

A

3B

7B

Fig. 3B

3A

3B 3B 3B 3B 3B W

3C

3L

G

Fig. 4A

5A

3A
3A
3A
3A
8D
8B
8A
3A
3A
3A
3L
3A
3A
3A
3A
3A

Fig. 4B

8D,2A
8B
8A
C2
C1
3E
3L
3A
D2
D1
C

Fig. 5

Fig. 6

Fig. 7

Fig. 8

Fig. 9

Fig. 10

Fig. 11

Fig. 12

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018229800 A
- JP 2018229801 A
- JP 2013052364 A
- JP H4190808 B